# EUROPEAN PATENT APPLICATION

(11) **EP 4 672 184 A1**
(43) Date of publication of application: **31.12.2025**
(21) Application number: 25182893.5
(22) Date of filing: 16.06.2025
(51) Int. Cl.: G07C 1/10, G07C 5/08, G07C 5/00, B60R 22/48

(54) **HAULAGE EQUIPMENT MANAGEMENT**

(30) Priority: 27.06.2024 GB 202409263
(71) Applicant: AITM Systems Limited, Hull East Yorkshire HU12 8FB (GB)
(72) Inventor: POOLEY, Stuart James, Hull, HU12 8FB (GB); AITCHISON, Iain Alistair, Hull, HU12 8FB (GB)
(74) Representative: CMS Cameron McKenna Nabarro Olswang LLP

(57) **Abstract**

An in-cab device in a cab of a vehicle such as a class 1 or class 2 heavy goods vehicle or other vehicles receives an image. The image has been captured by a camera in the vehicle, the image depicting a driver of the vehicle. An encoding of the image is computed. Tachograph data is received from a tachograph card inserted into a tachograph in the vehicle. The encoded image and the tachograph data are sent to a service for authenticating the driver as being an owner of the tachograph card. The method comprises receiving a result from the service. In response to the result authenticating the encoded image as depicting the owner of the tachograph card, the vehicle is enabled to be driven. In response to the result not authenticating the encoded image as depicting the owner of the tachograph card, the vehicle is retained in a stationary state.

## Description

The present disclosure relates to haulage and ways of securely managing use of haulage equipment such as heavy goods vehicles to facilitate safety.

### BACKGROUND

Heavy goods vehicles, including class 1 articulated vehicles and class 2 rigid vehicles are typically managed in fleets. An individual vehicle may be driven by many different individual human drivers at different times. An individual driver may drive different vehicles in a fleet at different times. A transport manager is an individual who manages the fleet of vehicles and the human drivers. The transport manager's task is complex and time consuming and involves being familiar and up to date with regulations and compliance requirements.

Tachograph machines are available to collect data for use by transport managers. Tachograph machines are fixed in a cab of each vehicle and have sensors for collecting data about how far and for how long a vehicle has been driven. However, tachograph machines are limited in the type of data they collect and are subject to human interaction to operate and retrieve data from.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a method which may be computer implemented and may be performed by an in-cab device in a cab of a vehicle such as a class 1 or class 2 heavy goods vehicle. An image is received, the image having been captured by a camera in the vehicle, the image depicting a driver of the vehicle. An encoding of the image is computed using a neural network encoder, the encoding of the image being a vector. Tachograph data is received from a tachograph card inserted into a tachograph in the vehicle. The encoded image and the tachograph data are sent to a service for authenticating the driver as being the owner of the inserted tachograph card. The method comprises receiving a result from the service. In response to the result authenticating the encoded image as depicting the owner of the tachograph card, the vehicle is enabled to be driven. In response to the result not authenticating the encoded image as depicting the owner of the tachograph card, the vehicle is retained in a stationary state. In this way security is enhanced since drivers who borrow tachograph cards of other drivers are unable to drive the vehicle. Safety is also enhanced since tachograph cards are used appropriately. Since the image is encoded security is enhanced as malicious parties intercepting the encoded image find it difficult to interpret. Efficiency is facilitated since the encoded image is smaller than the image and so bandwidth requirements for sending the encoded image to the authentication service are reduced as compared with sending the image itself.

Using a neural network encoder gives a practical, efficient way to compute the encoding. The neural network encoder may be deployed in the in-cab device in some cases. Having the encoder in the in-cab device gives security since access to the in-cab device generally requires access to the vehicle itself.

Preferably, the method comprises of classifying the received image as depicting the driver wearing a securely fastened seatbelt or not wearing a securely fastened seatbelt and enabling the vehicle to be driven only in response to the classification indicating the driver is wearing a securely fastened seatbelt. Furthermore, random (or continuous) pictures may be taken during the hours of operation of the vehicle to ensure continuous compliance with the legal requirement. Failure to comply will result in a warning being raised on an in-cab device and an email sent to the Transport Manager. In this way safety is facilitated even for cases where drivers insert a seatbelt plug into a seatbelt socket in the driver's seat where the seatbelt plug is not connected to any seatbelt.

Preferably the classifying is performed using a neural network which also computes the encoding. By doing this space is saved in the in-cab device where the encoder and classifier are both in the in-cab device. Efficiency is gained since computation is carried out once rather than twice. Power is also saved for the same reason.

In various examples the method is performed by an in-cab device in the vehicle.

Preferably the method comprises receiving information from a transport manager service and displaying the information at a user interface associated with the in-cab device. The user interface may be displayed at a screen in or on a dashboard in the cab of the vehicle. A non-exhaustive list of examples of information received from the transport manager service and displayed at the user interface is: notification of upcoming driver rest break, overspeeds, driving hours, remaining duty available, notifications of when legal break requirement is due in advance (10-15 minutes before), and notification of the completion of legal rest period. Displaying the information at the user interface enables the driver to comply with safety requirements and enables the transport manager to manage the vehicle fleet and drivers efficiently.

Preferably the method comprises of sending the result to a computing device of a transport manager. In this way the authentication result, such as whether the image of the driver agrees with the tachograph card data, is made available to a transport manager. The transport manager may receive authentication results from many vehicles and is able to take the data into account when managing the drivers and fleet of vehicles.

Preferably, sending the encoded image and the tachograph data to the service triggers storing of the result and the encoded image in a record associated with the tachograph card. In this way a record is kept that may be queried by a transport manager at a later date. By storing the encoded image rather than the image itself, security is enhanced since malicious parties gaining access to the encoded image find it difficult to interpret. A provider of the authentication service, or transport manager service, does not have access to the images themselves, only to the encodings. In addition, the record is concise so that storage requirements are reduced (as compared with storing images). In some cases, the encoded image may be decoded to produce an image similar and almost identical to the image originally captured by the camera in the vehicle cab. However, decoding the image is not essential.

Preferably, the method comprises sending the encoded image using plaintext and sending the tachograph data in encrypted form. Since the encoded image is difficult to interpret it is possible to send in plaintext form thereby saving computation costs of encryption of the encoded image. In contrast, the tachograph data maybe encrypted as it comprises personal, sensitive data.

Preferably the method comprises, in response to enabling the vehicle to be driven, receiving sensor data from the vehicle and sending the sensor data to the service together with the encoding, such that the encoding acts as an identifier of a driver and vehicle associated with the sensor data. In this way the transport manager is able to access the sensor data from a store storing the sensor data in association with the encoding.

According to another aspect there is a method performed by a transport manager service comprising:
receiving a neural network vector encoding of an image captured by a camera in a vehicle,
the image depicting a driver of the vehicle;
receiving tachograph data from a tachograph card inserted into a tachograph in the vehicle;
computing a result authenticating the driver as being an owner of the tachograph card or not, by using the received neural network vector encoding and the received tachograph data;
sending the result to the vehicle;
in response to the result authenticating the encoded image as depicting the owner of the tachograph card, enabling the vehicle to be driven;
in response to the result not authenticating the encoded image as depicting the owner of the tachograph card, retaining the vehicle in a stationary state. The transport manager service facilitates and promotes safety since the vehicle is retained in a stationary state where authentication fails. The transport manager service facilitates security since tachograph cards cannot be lent or borrowed between drivers.

Preferably, the transport manager service, in response to the vehicle being driven, finds a record in a database, the record being identifiable by the encoding and associated with the driver. The service stores in the record a log of messages sent to the driver by a transport manager using the service, where the messages are about compliance of the driver or vehicle with road haulage regulations. In this way a transport manager has a log of messages and is easily able to provide the log to an auditor.

Preferably the transport manager service automatically generates at least one of the messages using rules about haulage regulations and any of: the result of, but not limited to, sensor data received from the vehicle, driving license data, qualification data, driver hours and working time, vehicles on an operator license, vehicle documents, safety checks, inspections, tests. By automatically generating and sending the messages the transport manager service facilitates safety and compliance with regulations.

Preferably the transport manager service is arranged to receive user input from a transport manager and is arranged so that enabling the vehicle to be driven is only possible in response to receiving the user input from the transport manager. This promotes safety.

In some examples the transport manager service generates a user interface implementing a workflow of a transport manager, and intersperses the workflow with a plurality of check points, whereby the workflow may only progress beyond a checkpoint in response to user input received from a transport manager. This promotes safety since the transport manager completes the workflow steps appropriately.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a driver in a cab of a class 1 heavy goods vehicle and where the cab has an in-cab device for interoperation with a transport manager service;
FIG. 2 illustrates schematically an in-cab device in communication with various data sources via a communications network;
FIG. 3 is a schematic diagram of an in-cab device in communication with various equipment;
FIG. 4 is a flow diagram of a method performed by an in-cab device;
FIG. 5 is a schematic diagram of an in-cab device;
FIG. 6 is a flow diagram of a method performed by a transport manager service;
FIG. 7 is a schematic diagram of a classifier and encoder;
FIG. 8 is a schematic diagram of a computing device used to implement a transport manager service or an authentication service or an in-cab device.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

As mentioned above, a transport manager is an individual who manages a fleet of vehicles and human drivers. The transport manager's task is complex and time consuming and involves being familiar and up to date with regulations and compliance and safety requirements. The transport managers task is exacerbated by difficulties such as security breaches of tachograph machines in vehicles, such as where a driver borrows another driver's tachograph card or has a second, undeclared tachograph card. Failure of a transport manager to properly comply with regulations and manage the fleet and drivers effectively, can lead to accidents that may incur loss of life. In various examples described herein there is an authentication service and/or transport manager service which is cloud based. One or more of the services interoperate with an in-cab device to promote safety and/or facilitate security. In some cases workflows are implemented which facilitate security and safety by ensuring actions are taken where appropriate and/or preventing vehicles from moving.

A transport manager has the complex task of interrogating and analysing data required to achieve compliance with the office of the traffic commissioners (OTC) in line with requirements of vehicle operator licenses. Due to human error there can be non-compliance with various regulations. Maintenance for vehicles under an Operator Licence have stringent regulatory requirements (such as 6-8 weekly inspections, laden/unladen vehicle brake testing in line with the heavy vehicle brake codes (DTP codes) as per the respective plating certificates) the results of which have to be reviewed by the Transport Manager to ensure that the vehicle/trailer is compliant and legally roadworthy.

In an example, for the vehicle break test (VBT), the vehicle is deemed unroadworthy if the incorrect DTP codes have been entered for the test. The vehicle should not be used until the correct DTP codes and test results have been documented. Vehicles would therefore need to be resubmitted for retest and the correct codes entered to gain a positive pass.

The present technology comprises a transport manager service 120 which may address compliance related issues within a Transport Manager role in line with regulation such as the OTC requirements and current legislations. The transport manager service reduces to near zero the "human error" factor relating to road safety compliance of operating machinery/vehicles and legal data compliance regarding inspections, maintenance, vehicle/trailer roller break tester (RBT) reports, driver analysis for operational legislation. Thus, maintaining better operator compliance risk scores (OCRS) in line with the OTC and road worthiness and in conjunction with any respective Operator Licence. In order to achieve this various technical hurdles have been overcome concerning security and safety. Using an efficient image encoder latency is reduced and scalability achieved.

The transport manager service 120 is able to detect patterns in non-compliance, maintenance and ongoing wear and tear of equipment (for example tyre tread depth / brake pad wear predictions in-between servicing/PMI's based on mileages). From the PMI sheets, the transport manager service 120 uses certain information (for example tyre tread depth) to suggest possible dates by which a tyre may need to be replaced and highlight abnormal wear and tear. The transport manager service 120 cross references the PMI sheets with the daily driver defect reports, to ensure that A) any defects are rectified asap, B) there is nothing that shows on the PMI sheet that was not previously on there by the driver, as this would indicate that the daily defect reports are not being completed in full and correctly. The transport manager 124 is notified via email if this is the case and suggested action provided. C) cross reference any defects reported by the driver, via the defect reporting system, have been rectified, either at PMI or during other maintenance. Any defects not rectified are reported to the transport manager 124. Reminders are sent until the defect has been rectified.

The transport manager service 120 may collate and analyse tyre data from the maintenance records to create and maintain register for all vehicles. The transport manager service may further monitor tyre usage by vehicle and driver to highlight any issues in driving styles, or excessive costs incurred on the vehicle or by the driver.

As the transport manager service 120 is able to monitor vehicles and advise drivers of their compliance requirements in real time 24hrs per day, this improves OTC compliance, telematic reports and road safety for other road users.

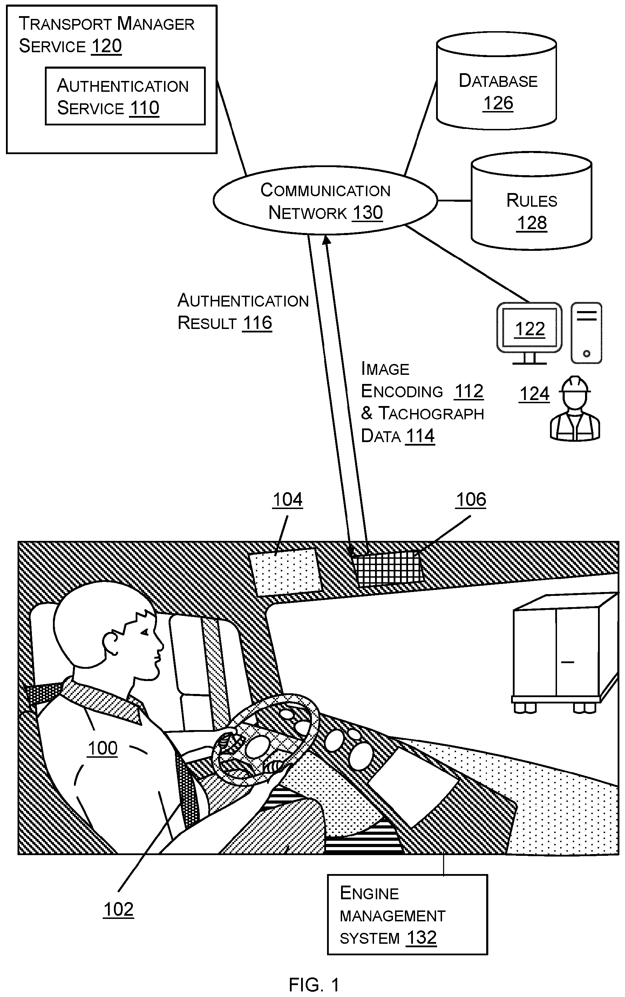

FIG. 1 is a schematic diagram of a driver 100 in a cab of a heavy goods vehicle and where the cab has an in-cab device 106 for interoperation with a transport manager service 120. The transport manager service 120 is implemented using a web server, compute node or other computing resource accessible to the in-cab device 106 via communications network 130. Communications network 130 is the internet, or any other communications network such as a peer to peer network between vehicles and other computing devices. The in-cab device 106 is able to communicate with the communications network 130 wirelessly or using a wired connection. The transport manager service 120 comprises an authentication service 110 which is computer implemented and explained in more detail below. The transport manager service 120 has access to database 126 comprising driver records, vehicle records, encoded images, sensor data and other information. A vehicle record stores an operator license disc number for a specific vehicle. The transport manager service 120 has access to a store of rules 128 for transport management. The transport manager service 120 is accessible to a desktop computer 122 or other computing device of a transport manager 124. The transport manager service 120 may create a graphical user interface to be rendered at the computing device of the transport manager 124 to facilitate safety and/or security. Note that the example of FIG. 1 may be applied to other types of vehicle such as class 2 heavy goods vehicles or other vehicles that require tachograph usage or other vehicles in industries with similar regulations

A tachograph 104 is installed in the cab of the vehicle. The tachograph 104 comprises a tachograph head which is located in a dashboard of the vehicle and may comprise a display screen, a card reader and control buttons. In FIG. 1 the tachograph head is mounted in the cab above the windscreen. The tachograph head is connected via a wired connection to a sender unit which is mounted to a gearbox of the vehicle. The sender unit sends sensor data from the gearbox to the tachograph head. The sensor data comprises electronic pulses produced as a gearbox output shaft rotates. The pulses are related to speed of the vehicle. Using the pulses the tachograph head is able to record distance travelled by the vehicle as well as speed of the vehicle and time driven. The distance data is recorded in a memory in the tachograph head and also on the tachograph card. The speed, time and other data is recorded in the tachograph head. In some cases the tachograph head is also connected to a global positioning system GPS and records geographical location of the vehicle output by the GPS. The tachograph head comprises a card reader which is able to read data from a tachograph card inserted by the driver. The data may comprise an identifier of the driver 100 such as a driving license number or tacho card number of the driver.

Within the vehicle cab the in-cab device 106 is fixed or mounted on the cab interior. The in-cab device 106 comprises an encoder for encoding digital images, an optional image classifier, and functionality for receiving tachograph data 114 from the tachograph 104. The in-cab device 106 has a camera for capturing an image of the driver 100, or may be connected to a camera in the cab for capturing an image of the driver 100. The in-cab device 106 is able to send an authentication request to an authentication service 110 in the transport manager service 120. The authentication request comprises an encoding of an image captured by the in cab camera, and tachograph data 114 from a driver tachograph card in the tachograph 104. In response the authentication service 110 computes an authentication result 116 and sends the authentication result 116 back to the in-cab device 106. In response to the authentication result 116 being successful, the in-cab device 106 sends instructions to an engine management system 132, or immobilizer, of the vehicle enabling the vehicle to be driven. In response to the authentication result 116 failing, the in-cab device 106 sends instructions to an engine management system 132, or immobilizer, of the vehicle causing the vehicle to remain stationary. The in-cab device 106 is in communication with the engine management system 132 or immobilizer via a wired or wireless connection. Instructions sent over the wired connection from the in-cab device to the engine management system 132 or immobilizer may be encrypted. The engine management system 132 is a control unit that controls multiple systems of an internal combustion engine, or electric engine, of the heavy goods vehicle. In the case of an internal combustion engine the engine management system 132 controls functionality such as a fuel injection system, ignition system, throttle, valve timing. In the case of an electric engine the engine management system 132 controls at least power supply. The immobilizer is apparatus in the vehicle which is independent of the engine management system and is able to immobilize the vehicle by cutting power to the engine.

In some examples, the images captured by the camera in the cab are used to detect an alertness level of the driver 100. The images are processed by a classifier in the in-cab device that classifies the driver alertness level and sends the result to the transport manager service 120 for storing in the driver record. If the alertness level falls below a threshold the in-cab device 106 sounds an alarm or indicator advising the driver to take a break. The classifier may be a machine learning classifier trained using supervised learning via backpropagation. The training data comprises images of drivers labelled with alertness levels where the alertness levels have been determined by asking the drivers. The machine learning classifier is of any suitable type such as a support vector machine, multi-layer perceptron or convolutional neural network.

During rest breaks the vehicle may be immobilised. The in-cab device 106 detects when a rest break begins by using data from the tachograph as well as information from the driver record in the transport manager service 120. The in-cab device 106 sends a message to an immobiliser installed in the vehicle which immobilises the vehicle. The immobiliser works independently of the engine management system 132. In the case of an emergency, an emergency services professional such as a police officer, may ask the driver to move the vehicle even though the vehicle is immobilized due to the rest break. In this situation the driver makes a user input at the in-cab device 106 which generates a unique code. The police officer is able to sign the unique code by signing using a digital ink signature on the in-cab device 106 display screen. The driver 100 is able to keep a record of the unique code and signature, such as by taking a photograph of the code displayed on the in-cab device 106. The unique code and signature is sent from the in-cab device to the transport manager service 120 and stored in the driver record.

An override function is available in some examples via the transport manager service 120 such as operated by a transport manager 124 at his or her desktop computer. The override function enables the transport manager to trigger the transport manager service 120 to generate a unique code to enable the vehicle to be moved without a driver card. The unique code may be entered into the in cab device 106 in order to mobilize the vehicle.

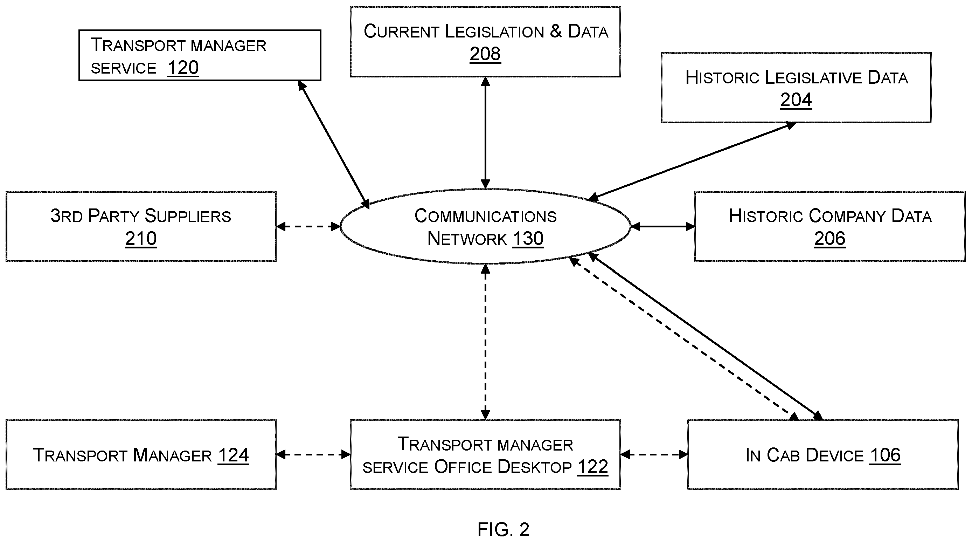

FIG. 2 illustrates schematically an in-cab device 106 in communication with various data sources and with transport manager service 120 (such as transport manager service 120 of FIG. 1) via a communications network 130. The dotted arrows indicate communication pathways such as wireless communications links or wired communications links. The solid arrows indicate artificial intelligence Al learning pathways which are paths where data and results of processing the data using machine learning are transferred. Machine learning functionality is available in the transport manager service 120.

The data sources illustrated in FIG. 2 include a store of current legislation and data 208 about road haulage regulations, a store of historic legislative data 204 about road haulage regulations, a store of historic company data 206 about one or more haulage companies.

Machine learning functionality in the transport manager service 120 is able to use data from the data sources and the in-cab device 106 to ensure Transport Manager and driver compliance in line with legislation and the operator's licence.

The transport manager service 120 is able to communicate with computing systems of third-party suppliers 210, with one or more client devices such as a desktop computer 122 used by a transport manager 124. In various examples the transport manager service 120 executes workflows and generates and sends messages to personal communications devices of drivers.

The transport manager service 120 operates on a real-time basis and produces warnings in advance and suggestions to drivers/management via the in-cab device 106 and desk-top device 122. The transport manager service 120 consistently monitors and applies the legislation and best practise without prejudice and will recognise patterns in short fallings along with identifying regular, consistent offenders in breaches of compliance and road safety. The transport manager service 120 addresses heavy goods vehicle (HGV) driver related compliance regarding real-time events via the in-cab device 106, helping and guiding the driver 100 and/or a transport manager 124 to work within legislative requirements. Protecting them from making errors relating to some of but not limited to, working time, driving infringements, driver hours, vehicle maintenance and defect reporting.

The transport manager service 120 produces reports based on infringements. The transport manager 124 requests the driver 100 to sign off the analysis via the in-cab device 106 after explanations are received. This report is then stored electronically in a driver record. In addition to this, the transport manager service 120 is able to recommend impartial additional training and/or further disciplinary action based on historical and current data.

The transport manager service 120 checks that every driver record has a driver's licence identifier. Any driver record that does not have a driver's license identifier triggers sending of an automated email to the transport manager 124. Reminders are send until a "done" response has been sent back to the transport manager service 120. The "done" response is time stamped and stored in the driver record together with the details of the sender. The transport manager service 120 automatically performs regular checks on the drivers' licences including entitlements and vocational qualifications (such as ADR) stores these and advises the transport manager 124 of any changes to entitlements, points, prosecutions etc. The transport manager service 120 automatically checks that all records for vocational drivers have a valid Driver Certificate of Professional Competence (CPC) card and monitors their hours, showing alerts when coming to an end. The transport manager service 120 monitors drivers and suggests additional relevant training and disciplinary processes as required. In general, the transport manager service 120 computes and stores time stamps of messages it sends or receives and documents it sends or receives.

The transport manager service 120 accesses the data from the vehicle tachograph 104 in real time and uses rules and templates to advise the drivers (via the in-cab device 106) of their responsibilities as follows:
- driving hours rules and regulations;
- drivers take the right number of breaks and periods of daily and weekly rest based on the relevant regulations which apply, including working time directive (WTD);
- drivers are recording their duty, driving time and rest breaks on the appropriate equipment;
- timesheets and their records are being provided for inspection as required. In some cases, the transport manager service 120 aggregates driver data in driver records and calculates whether more driving hours are available to a driver. In that case a message is sent to the driver to inform them how many hours are available and a copy of the message is sent to the transport manager 124.

Legislation states that Tachograph calibrations need to be up to date, the transport manager system 120 may cross reference data from the tachograph 104 with company records on calibration and send reminders to the transport manager 124 of upcoming recalibration dates

The transport manager service 120obtains full data from the vehicle digital tachograph unit, for example, via third party software / suppliers on a continual basis and is able to store these details in the relevant vehicle and driver records, for example, ensuring a minimum of 28 days data is stored.

In some examples, the transport manager service 120, downloads (generated in real time) and stores data from the vehicle tachograph 104. This data is continuously analysed to ensure driver and operational compliance within the regulations. Any non-compliance is immediately reported to transport manager service client devices such as desktop 122, including but not limited to, infringement breaches via a warning sign/signal/alarm.

The transport manager service 120 stores details and records of vehicles in a central database, including but not limited to, copies of vehicle logbooks (referred to as V5s) and individual operators' discs. These may be uploaded by the transport manager 124 via an optical character recognition OCR portal of the transport manager service 120.

· The transport manager 124 can add or remove vehicles from the database. When vehicles are added or removed the transport manager service 120 automatically updates the Vehicle Operator Licencing System via an application programming interface (API), ensuring compliance is maintained.

The transport manager service 120 accesses vehicle maintenance records (such as certificates of vehicle safety, roadworthiness and exhaust emissions compliance, servicing records or other records) via third party software integration and an OCR portal for manual records. Records are analysed for completeness, compliance and accuracy, with any discrepancies immediately notified to the transport manager 124 via the client device 122.

The transport manager service 120 analyses data from the maintenance records and uses rules or machine learning models to identify future maintenance issues and to complete fleet cost analysis.

The transport manager service 120 stores as a minimum, (in line with legal requirements), a rolling 15 month maintenance record that is available via a smart search facility at client devices of the transport manager service 120. Additional periods of record keeping over 15 months may be available.

In some examples, the transport manager service 120 via third party integration, completes a legal maintenance planning process in line with the company policy for PMI's and the terms of the company's Operator Licence, for all vehicles, plant, trailers etc including MOT's VED renewals, tacho calibration etc. The planner is available via client devices 122 of the transport manager service 120, with reminders sent to the transport manager 124 and, if applicable a logistics manager or transport planner, in advance of any planned maintenance or inspections. Additionally, the transport manager service 120 may advise the driver via the in-cab device 106 for any upcoming planned maintenance or inspections.

In line with the analysis of the maintenance records the transport manager service 120 is able to recommend additional preventative maintenance, such as tyre changes prior to reaching the legal minimum.

The transport manager service 120 integrates with third party daily defect reporting software, to allow defect reports to be stored against individual vehicle records. Defects may be notified via the in-cab device 106 to the desktop application, with each defect being graded in severity and urgency of rectification, by Al learning. The transport manager 124 may receive notification of these. Should the defect impact the vehicle or trailer as vehicle off road (VOR) an additional notification will also be sent to the logistics manager or transport manager 124 with recommendations for action.

The transport manager service 120 may not store the record until relevant action has been taken by the transport manager 124 to complete the rectification. The transport manager service 120 may also record and cross reference any maintenance records to daily defect reporting.

The transport manager service 120 may be designed to be an impartial and definitive interpretation of the legal requirements of both the role of Transport Manager and the requirements of a company holding an Operator's Licence. The transport manager service 120 may be used by the management of the company to aid the human Transport Manager 124 to be compliant by having check points in the processes, that need to be actioned by the transport manager 124. Further progress through a workflow of the transport manager service 120 is not be possible without the physical interaction of the transport manager 124.

In some examples the transport manager service 120 operates in a service mode or a normal mode. During normal mode the transport manager service 120 operates as described above. During service mode a Transport manager 124 instructs the transport manager service 120 that the vehicle is ready / available for service. The transport manager service 120 sends a message to an in cab device 106 of the vehicle to activate "service mode". During service mode a maintenance provider is able to use their tacho cards and confirm they have the vehicle.

After the "service mode" has been entered as instructed by the transport manager 124, a display indicates "service mode" on the in cab device 106 and a tacho card may be inserted by a maintenance engineer. The in cab device 106 allows the vehicle to be mobilised by the maintenance engineer during service mode when the tacho card of the maintenance engineer or maintenance provider is inserted. During service mode a log of vehicle movements and mileage is recorded and stored in the vehicle record as "service mileage".

When the PMI sheet has been received the transport manager service 120 automatically cancels the service mode and send a message to the in cab device 106. The in cab device returns to normal mode and normal procedures will apply from this point.

During service mode, a transport manager 124 is able to override the immobiliser, an example being, when a workshop team does not have a tacho card available, the transport manager 124, can override and a record and explanation is logged and recorded on the vehicle record.

In some examples of service mode, the transport manager service 120 does not send messages to drivers of the vehicle. The transport manager service 120 may enter the service mode by detecting that the vehicle is in a garage for maintenance, such as due to a scheduled service. The transport manager service 120 may enter the service mode when instructed to do so by a transport manager 124 via user input. During the service mode mechanics are able to move the vehicle and messages are not sent to the mechanics by the transport manager service 120. Data obtained by the transport manager service 120 during service mode is not stored in driver records and may be stored in a maintenance record. The transport manager service 120 moves from service mode to normal mode according to user input received from the transport manager 124.

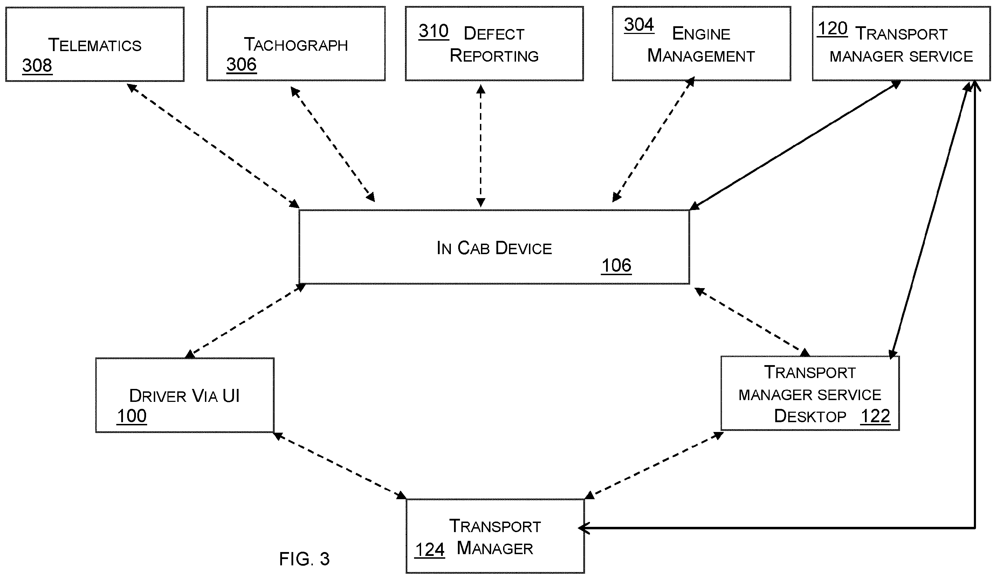

FIG. 3 is a schematic diagram of the in-cab device 106 in communication with various equipment including but not limited to the transport manager service 120, an engine management system 304, a defect reporting system 310, the tachograph 306 in the vehicle, a telematics system 308 (which is a telematics system in the vehicle). A telematics system 308 may be deployed in the vehicle in addition to the tachograph. The telematics system 308 comprises a global positioning system (GPS) transceiver and optionally other equipment to monitor location, status, behaviour, movement of the vehicle. In the case of an articulated heavy goods vehicle the telematics system may comprise of sensors to track movements and position of the trailer unit. In the case of refrigerated storage in the vehicle the telematics system may collect data from thermometers and other sensors in the trailer. The telematics system may receive data from internet of things sensors and/or radio frequency identifiers in the vehicle.

The defect reporting system 310 is used to ensure that drivers complete and return their driver defect reporting sheets and that they record defects correctly through analysing third party software or from using own company data and procedures.

The transport manager service 120 identifies the severity of defects and categorises them for the management team and emails the transport manager 124 accordingly. Suggestive corrective action is sent within the email for authorisation.

VOR's are monitored and controlled by transport manager service 120 and they are not allowed back into service until all required documentation has be received by the transport manager service 120. Only after this has been completed, will the transport manager service 120 send a release email to the transport manager 124.

The transport manager service 120 ensures that the correct paperwork for the load (abnormal load movement order, ADR paperwork or other relevant paperwork etc) is available for the driver via the UI on the in-cab device 106 when the vehicle is stationary.

The dotted arrows in FIG. 3 indicate communication pathways. The solid arrows between the in-cab device 106 in FIG. 3 represent learning and communication pathways since the in-cab device 106 is able to use machine learning functionality in the transport manager service 120 and/or the in-cab device 106. The in-cab device 106 is in communication with a transport manager service client device 122 such as a desktop computer of a transport manager 124. The transport manager service 120 may generate a graphical user interface for display at a display in the vehicle such as to driver 100. Information about what is displayed to the driver 100 is available to the transport manager 124 (since it may be sent from the transport manager service 120) to the client device 122 such as the transport manager's desktop computer.

In various examples the transport manager service 120stores one or more operator license records containing details of operator license terms and conditions. The transport manager service 120 uses rules and criteria to check, for example data in the driver records and vehicle records, as well as data from the tachographs and in cab devices 106, meet requirements of the relevant operator licenses. The operator license record holds continuation fee deadline details and sends reminders to the transport manager to ensure the continuation fee is paid, or automatically instructs that using an automatic debit order. The transport manager service 120 sends reminders to the transport manager 124 to ensure the terms of the operator license are adhered to.

The transport manager service 120 gathers information from the sources indicated in figures 2 and 3 and cross references the information with legislation and company policies. When a traffic examiner visit report (TEVR) or maintenance inspection visit report (MIVR), has to be provided the transport manager service 120 is able to automatically generate the report. As part of each driver record there is a training record storing evidence of training that has been completed by the driver including training for loading, unloading and load security. If any training is required for a driver the transport manager service 120 will flag this. The transport manager service 120 monitors how many CPC hours and which CPC modules a driver has completed and how many hours they have left to complete. The driver records may store details of whether a driver is self-employed. The transport manager service 120 completes automated regular checks on all drivers driving company vehicles. Disclosure and barring service checks may be stored in the driver records and checked automatically.

The transport manager service 120 may detect updates to legislation or new legislation, such as by querying a search engine. When updates to legislation or new legislation are detected, the transport manager service 120 prompts a generative model with the update or new legislation and any rules, criteria or thresholds used by the transport manager service 120 and/or in-cab device 106. The transport manager service 120 receives a response from the generative model comprising a new version of the rules, criteria or thresholds and replaces the rules, criteria or thresholds with the new version. The generative model may be a language model, such as GPT-4, GEMINI, LlaMa, or others.

The transport manager service 120 stores tachograph records in the respective driver record in date order and in a DDD format. The tachograph records may be stored in encrypted form.

In the case of analog tachographs, the transport manager service 120 keeps a record of analogue charts/printer rolls that have been issued, returned and stored. These may be uploaded by the transport manager 124 via an optical character recognition OCR portal of the transport manager service 120

The transport manager service monitors 120 who have been given spare tachograph rolls and when (minimum of 2 to be kept spare in each vehicle).

The transport manager service 120 has an audit function whereby reports for auditors are automatically generated from the records.

The transport manager service 120 allows for "double manning" where two licensed drivers use the same vehicle during a same working day. The transport manager service 120 is able to use the individual driver records to correctly calculate the hours each driver has worked as part of the "double manning".

The transport manager service 120 is able to use data gained from a fleet of vehicles to collate data when a driver uses more than one vehicle per day or week.

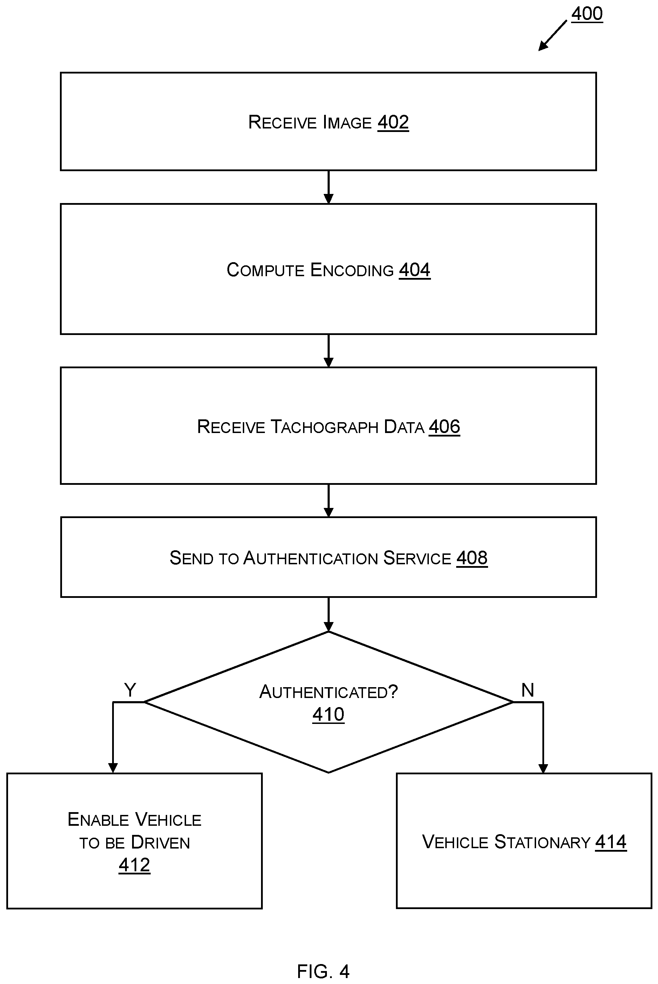

FIG. 4 is a flow diagram of a method 400 performed by an in-cab device 106. The method is computer-implemented and comprises receiving 402 an image. The image depicts a driver of a vehicle (such as in the scenario illustrated in FIG. 1) and may be captured by a camera facing the driver in a cab of the vehicle or the in-cab device / tachograph. In some cases, the field of view of the camera is arranged so as to capture a face of the driver as well as a shoulder or torso of the driver showing a location of a seatbelt being worn. The image may be a colour digital image or any other type of digital image.

The image is received by the in-cab device 106 and the in-cab device 106 computes 404 an encoding of the image. The encoding is a vector of numerical values which is referred to as an embedding vector since the vector represents the image as a location in a multi-dimensional space. In an example the encoder is a neural network for computing latent space embeddings of images and/or classifying images. Any suitable neural network for encoding images into vectors may be used such as ResNet, Image2Vec, AlexNet, VGG, Convolutional Neural Network. The neural network in the encoder has already been trained on a task such as object recognition. In an example the training is supervised training using labelled training data.

The in-cab device 106 receives 406 tachograph data from the tachograph 104 in the vehicle. The tachograph data comprises an identifier of a tachograph card and or a driving license of a driver, such as a driving license number. The tachograph data may also comprise an identifier of the vehicle.

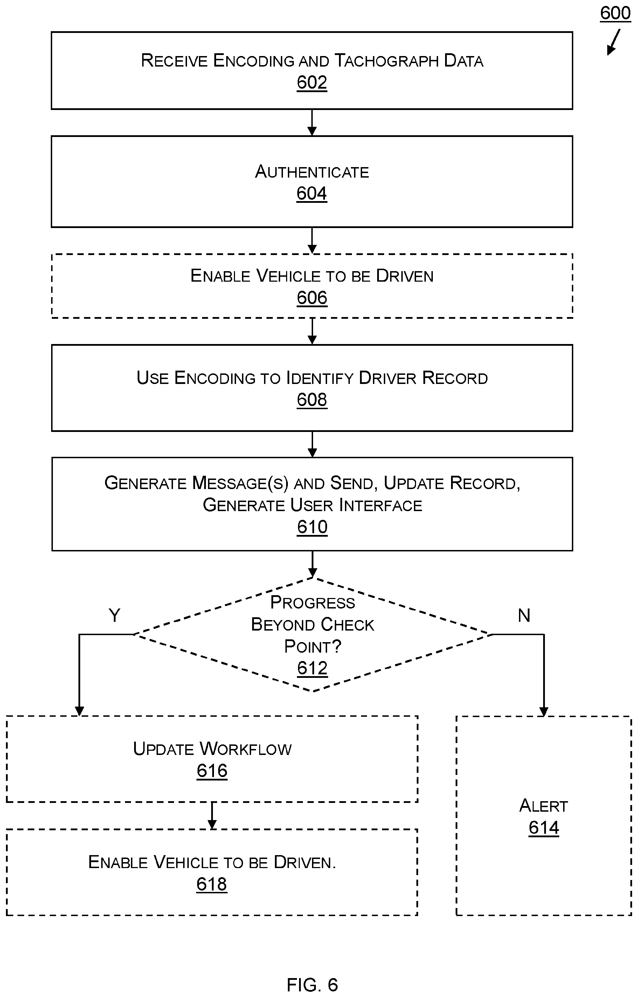

The in-cab device 106 sends 408 the encoding and the tachograph data to an authentication service 110 such as the authentication service 110 in the transport manager service 120. The in-cab device 106 sends the encoding using plain text in some examples since the encoding is a vector of numbers and so is difficult for malicious parties to interpret. Malicious parties who intercept communications between the in-cab device 106 and the transport manager service 120 may intercept the encoding but are unable to interpret it. Malicious parties who have access to the transport manager service 120 may obtain the encoding but are unable to interpret it. The in-cab device 106 sends the tachograph data to the authentication service 110 together with the encoding. In some cases, there is a time stamp on the encoding indicating a time at which the image was captured. Detail about how the authentication service 110 carries out authentication of the encoding and tachograph data is described with reference to FIG. 6. The tachograph data may be sent in encrypted form.

The in-cab device 106 receives a response from the authentication service 110. The response indicates whether the encoding and tachograph data are authenticated or not. Thus FIG. 4 has a decision point 410. Where there is authentication the in-cab device 106 enables 412 the vehicle to be driven by sending instructions to an engine management system of the vehicle or an immobilizer of the vehicle. Where there is failed authentication the in-cab device 106 instructs the vehicle to be stationary 414 by sending instructions to an engine management system or immobilizer of the vehicle. In response to the vehicle being enabled to be driven 412 sensor data is received from the vehicle at the in-cab device 106. The sensor data is sent to the transport manager service together with the encoding and tachograph data, such as the encoding acts as an identifier of a driver and vehicle associated with the sensor data.

In some cases, the method of FIG. 4 includes a classification operation performed at any point in the method after the image has been received. The in-cab device 106 classifies the image as depicting a person wearing a seat belt or not wearing a seat belt or as unclassified. If the image is classified as depicting a person not wearing a seat belt the method jumps to operation 414 where the vehicle is kept stationary. If the image is classified as depicting a person wearing a seat belt the method proceeds as described above. If the image is classified as unclassified, such as where there is no driver depicted or where the image is blurred or faulty, another image is captured.

The classification operation is particularly effective at improving safety since drivers not wearing seat belts are unable to move the vehicle. If a driver uses a seat belt plug to insert into a seat belt socket and where the seat belt strap is missing, the classification operation will detect the situation, since the seat belt strap is missing in the image. The classification operation may be carried out at intervals during a journey of a vehicle by classifying images captured of the driver at intervals. If the seat belt is detected as not being worn whilst the vehicle is in motion an alert is sounded and a notification sent to the transport manager service 120 and the client device of the transport manager 124.

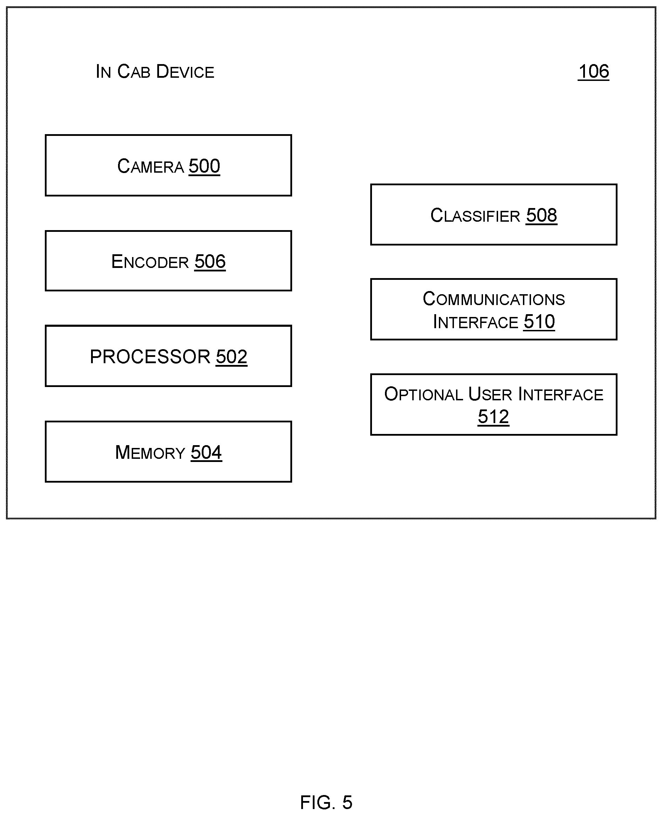

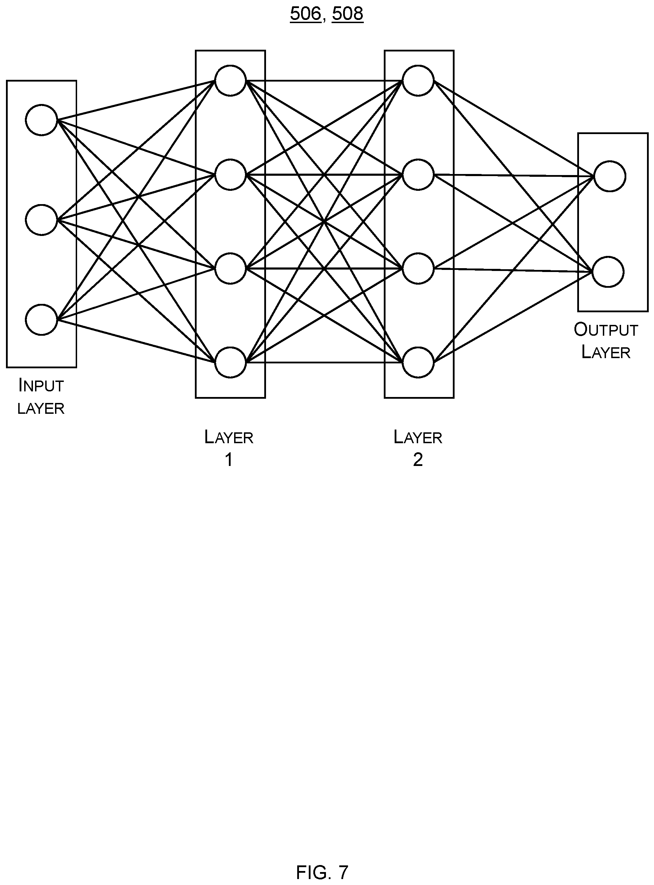

To perform the classification the in-cab device 106 comprises a classifier as described in more detail with reference to FIG. 5 and FIG. 7.

The method of FIG. 4 is extended in some examples whereby the in-cab device 106 receives information from the transport manager service 120 and displays the information at a user interface associated with the in-cab device 106. The information from the transport manager service 120 may be information about when to take a rest break in order to comply with road haulage regulations or other regulatory information relating to safety.

In some cases, the method of FIG. 4 is extended whereby the in cab device 106 sends the authentication result to a client device of the transport manager service 120, such as desktop computer 122 or a mobile phone of transport manager 124. The authentication result may be sent to the client device together with current data from the tachograph 104 or other sensors in the vehicle. In this way the transport manager 124 gains up to date information about the situation faster than if the transport manager service 120 sends the authentication result direct to the client device 122 and then the client device 122 has to query the transport manager service 120 and/or vehicle to obtain current sensor data from the vehicle.

In some cases, operation 408 of FIG. 4, where the in-cab device 106 sends a request to the authentication service 110, triggers storing of the encoded image and the authentication result in a record associated with the tachograph card. Because the encoded image is a vector, personal information in the image is not revealed in the stored data and the stored data is secure. The record associated with the tachograph card may be a record of a driving license. It is then possible to query the store in a variety of ways. Because the encoded image is a vector in a multi-dimensional space it is possible to query the store using a cosine similarity metric or other distance measure to find vectors which are similar to a query vector. Thus, given a vector encoding of an image it is possible to find all records in the store which have encodings that are within a specified distance of the given vector encoding. In this way the transport manager service 120 is able to find all records with images depicting similar content i.e. similar drivers who may be associated with different driving licenses due to borrowing/lending of tachograph cards. It is also possible to query the store by tachograph card data, such as driving license number.

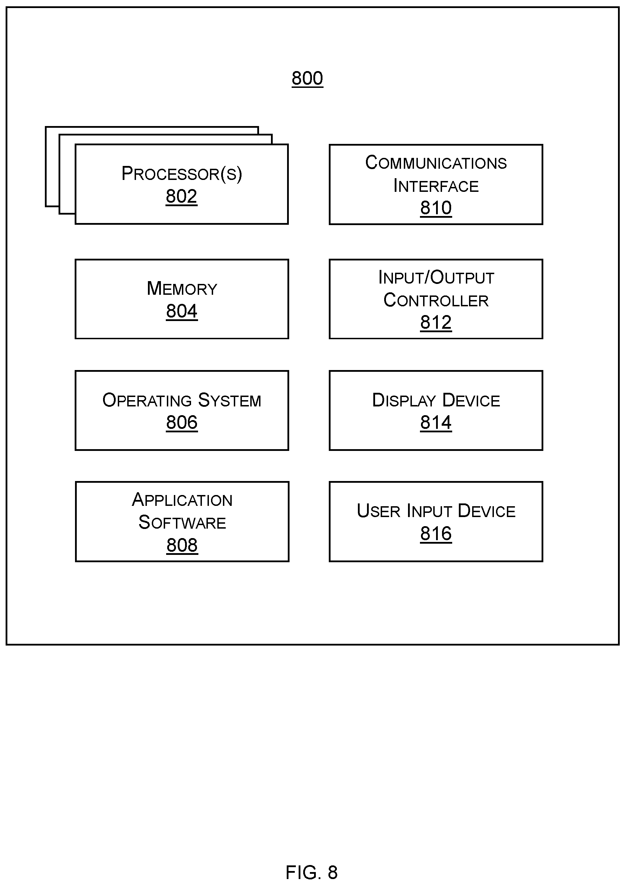

FIG. 5 is a schematic diagram of an in-cab device 106. The in-cab device 106 comprises a processor 502 such as a microprocessor or any other suitable processor as described with reference to FIG. 8. The in-cab device 106 comprises a camera 500 or a connection to a camera so as to be able to receive images captured by a camera in the cab. The camera may be a digital colour camera, a video camera, a dash cam or other type of camera. The in-cab device 106 comprises a memory 504. The in-cab device 106 comprises an encoder 506 for encoding images. The encoder 506 is a neural network encoder for computing latent space embeddings of images and/or classifying images. Any suitable neural network for encoding images into vectors may be used such as ResNet, Image2Vec, AlexNet, VGG. The in-cab device 106 optionally has a classifier 508 for classifying images. In some cases, the classifier 508 is a neural network and is the same neural network as that of the encoder 506. By using the same neural network for the encoder 506 and the classifier 508 space is saved which is particularly useful as the in-cab device 106 is deployed in a small environment. By using the same neural network for the encoder 506 and the classifier 508 power is conserved since one rather than two neural networks are operated.

The in-cab device 106 has a communications interface 510 to enable communication with a transport manager service 120 in the cloud, and/or an authentication service 110 in the cloud. The communications interface 510 may use wireless communications technology such as 5G or other wireless communications. The communications interface 510 may comprise a wired or wireless connection to an engine management system 132 or immobilizer of the vehicle and to a tachograph 104 of the vehicle. The in-cab device 106 optionally has a user interface 512 such as a graphical user interface displayed on a display screen, or an audio user interface.

FIG. 6 is a flow diagram of a method performed by a transport manager service 120. An authentication service 110 (which may be part of the transport manager service 120) receives 602 an encoding and tachograph data. The encoding is a vector representing an image and is an embedding of the image in a multi-dimensional space. The tachograph data comprises an identifier of a driver 100, where the identifier is a driving license number or other identifier read from a tachograph card inserted into a tachograph 104 of a vehicle. The encoding is an encoding of an image captured by a camera in a vehicle. The image has an associated time stamp being a time when the image was captured. The encoding and the timestamp are received by the authentication service 110 in some cases.

The authentication service 110 authenticates 604 the encoding and the tachograph data; that is the authentication service 110 determines whether the image depicts a driver 100 who has the driving license listed in the tachograph data or not. Thus, situations where a driver 100 borrows another person's tachograph card are detected since in these situations the driver depicted in the image is not the same as the driver having the driving license, tachograph card or an additional unregistered tachograph card. In order to make the determination the authentication service 110 has access to driver records; each driver record having been verified by a driving license issuing authority and/or the transport manager 124. Each driver record comprises an encoding of an image depicting the driver 100 where the encoding is a vector computed using the same encoder 506 as in the in-cab device 106 or a different encoder. In the case that a different encoder is used a mapping between the embedding spaces of the encoders is known (such as by being computed empirically). Each driver record also has another identifier of the driver such as a driving license number.

In some cases, the authentication service 110 checks whether a time stamp of the encoded image is within a journey time of the vehicle (as indicated in the tachograph data). This type of check prevents fraudulent replacement of images of drivers. If the time stamp of the image is outside the journey time of the vehicle by more than a specified time interval, the authentication service 110 returns a result indicating failed authentication. If the time stamp of the image is within the journey time of the vehicle the authentication service 110 determines whether the image depicts a driver 100 who has the driving license listed in the tachograph data or not.

The authentication service 110 receives 602 the encoding and tachograph data. The authentication service 110 queries the store of driver records using the encoding. The query is performed using vector search, by searching for vectors in the store of driver records which are close to the encoding, such as being within a threshold distance computed using a cosine similarity metric or other distance metric. The closest driver record is found. A comparison of the driving license number from the closest driver record and the tachograph data is made. If the comparison finds a match the authentication 604 is successful i.e an owner of the tachograph card matches the driver depicted in the image captured in the cab. Otherwise, the authentication 604 is a negative result. Because the vector search is extremely efficient to compute and because the encoding is already in vector form, it is possible to obtain the authentication result with low latency.

In the case that authentication 604 is successful the vehicle is enabled 606 to be driven.

A driver record has been identified 608 using the encoding as described above. The transport manager service 120 generates 610 messages and sends those to an email address of the driver 100. The messages may report events where the speed of the vehicle exceeded a limit, or where the vehicle experienced a sudden drop in speed, or where a rest break was not observed. The transport manager service 120 may update the driver record to keep a record of what messages were sent to the driver's email address and when they were sent.

The transport manager service 120 may generate a user interface and display the user interface at a client device such as a desktop computer (122 in FIG. 1) of a transport manager 124. The user interface may comprise one or more workflows which are sequences of tasks for the transport manager 124. A workflow may have a check point beyond which it is only possible to proceed if the transport manager 124 operates the user interface to carry out specified actions. The transport manager service 120 checks 612 whether progress beyond a check point is to be enabled. If not an alert 614 is triggered such as by sending a message to a mobile phone and or the desktop 122 of the transport manager 124. Optionally one or more vehicles are disabled. If progress beyond the check point is possible the workflow is updated 616 and the vehicle is enabled to be driven 618.

FIG. 7 is a schematic diagram of a neural network which acts as either an encoder 506 or a classifier 508 or as both an encoder 506 and a classifier 508. In this example the encoder 506 and classifier 508 are the same neural network. The neural network comprises a plurality of layers of nodes and in FIG. 7 an input layer, two internal layers (layer 1 and layer 2), and an output layer are shown. However, in practice there may be many more internal layers. The input layer is shown as comprising three nodes depicted as circles for clarity although in practice the input layer may comprise a two-dimensional array of nodes with one node per pixel or group of pixels of the image depicting the driver 100. Each internal layer may also be a two-dimensional array of nodes. The output layer in this example comprises two nodes, one representing the class of drivers wearing seatbelts and the other representing the class of drivers not wearing seatbelts.

When the neural network of FIG. 7 is used to classify an image, values at the output layer nodes are read and used to classify the image as depicting a driver 100 wearing a seatbelt or not. If a node in the output layer corresponding to the class "driver wearing seatbelt" has an output value above a threshold the image is classified as depicting a driver 100 wearing a seatbelt. If the other node in the output layer has an output value above a threshold the image is classified as depicting a driver 100 not wearing a seatbelt. If the values at the output nodes are both below their respective thresholds the image is unclassified that is, it is not certain whether the image depicts a driver 100 wearing a seatbelt or not wearing a seatbelt.

The neural network is trained using supervised learning to classify images. Training data is obtained comprising a plurality of images of different drivers wearing seatbelts or not wearing seatbelts and in different vehicle cabs and under different lighting conditions. The images are labelled manually by a human as depicting drivers wearing seatbelts or not wearing seatbelts. There may be hundreds or thousands of images. In some cases, the images are synthetically generated using computer video rendering from a 3D model of a driver in a vehicle cab wearing a seatbelt or not wearing a seatbelt. Using the training data the neural network is trained using backpropagation to classify images as depicting a driver wearing a seatbelt or not wearing a seatbelt.

When the neural network of FIG. 7 is used to encode an image (after the neural network has been trained as described above), intensity values of the image pixels are input to the input layer. Computations are made by the nodes in the input layer according to the intensity values of the image pixels, weights of the nodes, functions of the nodes and any biases. The results of the computations are sent along the connections between layers to the nodes in the first internal layer (layer 1). In the example of FIG. 7 the layers are fully connected, that is every node in a layer is connected to every node in the next layer. However, it is not essential to use fully connected layers. Nodes in layer 1 receive inputs from the nodes in the input layer along the illustrated connections. The nodes in layer 1 carry out computations according to the inputs they receive as well as according to weights associated with the nodes and any biases and functions of the nodes. The results of the computations are sent along the connections to the next layer and the process continues in a forward pass through the neural network. A layer is selected by an operator, such as the penultimate layer, or another internal layer. The activations (output values) of the nodes of the selected layer are read off and used to form a vector which is the vector encoding the image.

In another example, the encoder is a neural network with a self-attention architecture. In this case the image is divided into a grid and intensity values in each grid cell are averaged. The averages are formed into a vector where the vector also has positional encodings encoding a position of each of the averages in the grid. The encoder 506 is trained using supervised learning with the labelled training data described above to classify the images. Values of the activations are read off from an internal layer of the neural network and these values are used to form the embedding vector representation of the image.

FIG. 8 is a schematic diagram of a computing device used to implement a transport manager service 120 or an authentication service 110 or an in-cab device 106.

FIG. 8 illustrates various components of an example computing device 800 in which embodiments of an authentication service 110, or a transport manager service 120, or an in-cab device 106 are implemented in some examples. The computing device is of any suitable form such as a microprocessor integrated into a dashboard of a vehicle cab, a compute server in a data centre, a web server, a desk top computer or other computing device.

The computing device 800 comprises one or more processors 802 which are microprocessors, controllers or any other suitable type of processors for processing computer executable instructions to control the operation of the device in order to perform the methods of any of figures 2,3,4,6,7. In some examples, for example where a system on a chip architecture is used, the processors 802 include one or more fixed function blocks (also referred to as accelerators) which implement a part of the method of figures 2,3,4,6,7 in hardware (rather than software or firmware). That is, the methods described herein are implemented in any one or more of software, firmware, hardware. The computing device has a data store holding images, authentication results, encodings, messages or other data. Platform software comprising an operating system 806 or any other suitable platform software is provided at the computing-based device to enable application software 808 to be executed on the device. Although the computer storage media (memory 804) is shown within the computing-based device 800 it will be appreciated that the storage is, in some examples, distributed or located remotely and accessed via a network or other communication link (e.g. using communication interface 810).

The computing-based device 800 also comprises an input/output controller 812 arranged to output display information to a display device 814 which may be separate from or integral to the computing-based device 800. The display information may provide a graphical user interface to present stages of a workflow and receive user input from a transport manager 124. The input/output controller 812 is also arranged to receive and process input from one or more devices, such as a tachograph 104, an engine management system 132, an immobilizer, a camera in a vehicle cab, a user input device 816 (e.g. a mouse, keyboard, camera, microphone or other sensor). In some examples the user input device 816 detects voice input, user gestures or other user actions. In an embodiment the display device 814 also acts as the user input device 816 if it is a touch sensitive display device. The input/output controller 812 outputs data to devices other than the display device in some examples. In some cases, the input/output controller 812 outputs instructions to a engine management system 132.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

## Claims

1. A method comprising:
receiving (402) an image captured by a camera in a vehicle, the image depicting a driver (100) of the vehicle;
computing, using a neural network encoder, an encoding of the image, wherein the encoding of the image is a vector;
receiving (406) tachograph data from a tachograph card inserted into a tachograph in the vehicle;
sending the encoded image and the tachograph data to a service for authenticating the driver as being an owner of the tachograph card;
receiving a result from the service;
in response to the result authenticating the encoded image as depicting the owner of the tachograph card, enabling the vehicle to be driven;
in response to the result not authenticating the encoded image as depicting the owner of the tachograph card, retaining the vehicle in a stationary state.

2. The method as claimed in claim 1, further comprising classifying the received image as depicting the driver wearing a seatbelt or not wearing a seatbelt and enabling the vehicle to be driven only in response to the classification indicating the driver is wearing a seatbelt.

3. The method as claimed in claim 2 wherein the classifying is performed using a neural network which also computes the encoding.

4. The method as claimed in any preceding claim performed by an in-cab device in the vehicle.

5. The method as claimed in any preceding claim comprising receiving information from a transport manager service and displaying the information at a user interface associated with the in-cab device.

6. The method as claimed in any preceding claim comprising sending the result to a computing device of a transport manager.

7. The method as claimed in any preceding claim wherein sending the encoded image and the tachograph data to the service triggers storing of the result and the encoded image in a record associated with the tachograph card.

8. The method as claimed in any preceding claim comprising sending the encoded image using plaintext and sending the tachograph data in encrypted form.

9. The method as claimed in any preceding claim comprising, in response to enabling the vehicle to be driven, receiving sensor data from the vehicle and sending the sensor data to the service together with the encoding, such that the encoding acts as an identifier of a driver and vehicle associated with the sensor data.

10. A method performed by a transport manager service comprising:
receiving a neural network vector encoding of an image captured by a camera in a vehicle, the image depicting a driver (100) of the vehicle;
receiving tachograph data from a tachograph card inserted into a tachograph in the vehicle;
computing a result authenticating (604) the driver (100) as being an owner of the tachograph card or not, by using the received neural network vector encoding and the received tachograph data;
sending the result to the vehicle;
in response to the result authenticating the encoded image as depicting the owner of the tachograph card, enabling the vehicle to be driven;
in response to the result not authenticating the encoded image as depicting the owner of the tachograph card, retaining the vehicle in a stationary state.

11. The method of claim 10 comprising: in response to the vehicle being driven, finding a record in a database, the record being identifiable by the encoding and associated with the driver, and storing in the record a log of messages sent to the driver by a transport manager using the service, where the messages are about compliance of the driver or vehicle with road haulage regulations.

12. The method of claim 11 comprising automatically generating at least one of the messages using rules about road haulage regulations and any of: the result, sensor data received from the vehicle, driving license data, qualification data, driver hours and working time, vehicles on an operator license, vehicle documents, safety checks, inspections, tests.

13. The method of any of claims 10 to 12 comprising receiving user input from a transport manager and wherein enabling the vehicle to be driven is only possible in response to receiving the user input from the transport manager.

14. The method of any of claims 10 to 13 further comprising generating a user interface implementing a workflow of a transport manager and interspersing the workflow with a plurality of check points, whereby the workflow may only progress beyond a checkpoint in response to user input received from a transport manager.

15. A computer program comprising instructions which when executed by a processor implement the method of any of claims 1 to 14.
